# FASCICULE DE BREVET EUROPEEN

(11) **EP 3 381 800 B1**
(45) Date de publication et mention de la délivrance du brevet: **18.09.2019**
(21) Numéro de dépôt: 18155537.6
(22) Date de dépôt: 07.02.2018
(51) Int. Cl.: B64C 27/605

(54) **ROTOR DE GIRAVION INCLUANT UN ENSEMBLE DE PLATEAUX CYCLIQUES ET DEUX COMPAS TOURNANTS**
ROTOR EINES DREHFLÜGELFLUGZEUGS, DAS EINE GESAMTHEIT VON TAUMELSCHEIBEN UND ZWEI DREHKOMPASSEN UMFASST
ROTARY-WING AIRCRAFT INCLUDING A SET OF SWASHPLATES AND TWO DRIVE SCISSORS

(30) Priorité: 28.03.2017 FR 1770308
(43) Date de publication de la demande: 03.10.2018
(73) Titulaire: Airbus Helicopters, 13725 Marignane Cedex (FR)
(72) Inventeur: EBERHARD, Alain, 13880 Velaux (FR); OUAJJOU, Nabil, 13008 Marseille (FR); MASSAL, Fabien, 13119 SAINT Savournin (FR)
(74) Mandataire: GPI & Associés

(56) Documents cités:
- DE-B1- 2 414 570
- DE-U1-202007 001 203
- FR-A1- 2 893 914
- US-A- 5 810 562

## Description

La présente invention concerne un rotor de giravion qui inclut un ensemble de plateaux cycliques et deux compas tournants.

En particulier, l'aéronef est muni d'une voilure tournante. Cette voilure tournante comporte un rotor principal participant à la sustentation voire à la propulsion de l'aéronef. Classiquement, un tel rotor principal comporte un mât rotor qui met en rotation une pluralité de pales, classiquement via un moyeu rotor.

Afin de contrôler le déplacement de l'aéronef, le pas des pales du rotor principal est piloté.

La variation cyclique du pas des pales d'un rotor permet de faire varier le pas de chaque pale en fonction de son azimut. La variation collective du pas des pales d'un rotor induit par contre une variation identique du pas des pales de ce rotor.

Dès lors, le pas des pales d'un rotor peut être ajustable à l'aide de bielles de pas et d'un ensemble de plateaux cycliques agencé autour du mât rotor.

L'ensemble de plateaux cycliques est pourvu d'un plateau tournant lié aux bielles de pas, et d'un plateau non tournant lié aux commandes de vol. Le plateau non tournant est par exemple situé sous le plateau tournant, ou est entouré par ce plateau tournant.

De plus, le plateau non tournant est lié au plateau tournant pour imprimer ses mouvements au plateau tournant. Ainsi, le plateau tournant suit tous les mouvements du plateau non tournant et transmet ces mouvements aux pales via les bielles de pas.

En outre, le plateau non tournant et le plateau tournant sont à même d'être translatés le long de l'axe de rotation du rotor mais aussi d'être inclinés par rapport à cet axe de rotation. La translation et l'inclinaison du plateau non tournant et du plateau tournant peuvent être réalisées à l'aide d'un dispositif qui comprend une rotule de mât centrée sur l'axe de rotation du mât rotor et qui coulisse par exemple le long d'un élément structural. Cet élément structural est par exemple fixe dans le référentiel de l'aéronef et constitue un guide local autour du mât rotor.

Le plateau tournant de l'ensemble de plateaux cycliques est par suite lié au plateau non tournant par un organe de liaison permettant :
- au plateau tournant d'être solidaire du plateau non tournant en translation le long de l'axe de rotation du rotor,
- au plateau tournant d'osciller autour de la rotule de mât conjointement avec le plateau non tournant, et
- au plateau tournant d'effectuer une rotation autour de l'axe de rotation du rotor conjointement avec les pales.

Pour déplacer l'ensemble de plateaux cycliques en translation le long du mât rotor et/ou en rotation autour de la rotule de mât, l'aéronef peut comporter au moins trois servocommandes articulées au plateau tournant.

Lorsque toutes les servocommandes s'étendent ou se rétractent de la même manière, l'ensemble de plateaux cycliques se déplace en translation pour modifier collectivement le pas des pales du rotor. Par contre, lorsqu'au moins une servocommande est sollicitée différemment des autres servocommandes, l'ensemble de plateaux cycliques s'incline pour modifier cycliquement le pas des pales du rotor.

Par ailleurs, le plateau non tournant est fixé à la structure du giravion, éventuellement à une boîte de transmission de puissance, à l'aide d'au moins un compas fixe qui tend à l'empêcher de tourner autour de l'axe de rotation du rotor.

A l'inverse, le plateau tournant est entrainé en rotation par le mât rotor au travers d'au moins un compas tournant. A cet effet, le plateau tournant est attaché à au moins un compas tournant relié à l'ensemble tournant du rotor principal, par exemple au mât rotor ou au moyeu du rotor principal. Le mât rotor entraîne alors en rotation le plateau tournant, autour de l'axe de rotation, directement ou indirectement via le moyeu.

Un compas, tournant ou non tournant, peut comporter deux bras articulés entre eux. Plus précisément, un compas peut comporter un bras supérieur et un bras inférieur articulés entre eux par une articulation centrale de type liaison pivot. L'articulation centrale permet aux extrémités des deux bras d'un compas de s'écarter ou de s'approcher l'une de l'autre pour autoriser le déplacement en translation ou en rotation du plateau relié au compas.

Un compas tournant est alors muni d'un bras inférieur articulé au plateau tournant via une articulation inférieure de type liaison rotule. De plus, le compas tournant est muni d'un bras supérieur articulé par exemple à un entraîneur de compas via une articulation supérieure de type liaison pivot. Cet entraîneur de compas est éventuellement solidarisé au moyeu ou au mât rotor

En outre, un aéronef peut posséder deux compas tournants. Ces compas tournants sont diamétralement opposés, et s'étendent donc radialement selon un même diamètre au regard d'un cercle centré sur l'axe de rotation du rotor. Les diverses articulations des deux compas tournants sont centrées respectivement sur des centres d'articulation, les centres d'articulations étant contenus dans un même plan passant par l'axe de rotation du rotor.

En raison du nombre important de bielles de pas et de compas tournants, l'ensemble de plateaux cycliques présente un diamètre maximal relativement important pour permettre l'agencement sans interférence des bielles de pas et des compas tournants par exemple. Ce dimensionnement se fait au détriment des performances aérodynamiques du rotor et de sa masse.

Le document EP 1954559 présente un ensemble de plateaux cycliques.

Le document FR 2893914 présente une protection antichoc pour un bras d'un compas.

Les documents US 5810562 A, DE 2414570 B1 et DE 202007001203 U1 sont aussi connus.

La présente invention a alors pour objet de proposer un rotor tendant à présenter un ensemble de plateaux cycliques compact et léger.

L'invention vise donc notamment un rotor de giravion qui est muni d'un ensemble tournant effectuant une rotation autour d'un axe de rotation. Cet ensemble tournant comprend un mât rotor ainsi qu'une tête rotor portant au moins deux pales. Le rotor comprend un ensemble de plateaux cycliques muni d'un plateau non tournant et d'un plateau tournant, le rotor comprenant une bielle de pas par pale. Chaque bielle de pas est articulée au plateau tournant par une articulation dite « articulation de pas » par commodité, par exemple une articulation de type liaison rotule. Le rotor comprend deux compas tournants articulés au plateau tournant, chaque compas tournant comprenant un bras inférieur et un bras supérieur articulés l'un à l'autre par une articulation centrale par exemple de type liaison pivot. Chaque compas tournant comprend une articulation inférieure, par exemple de type liaison rotule, qui articule le bras inférieur de ce compas tournant au plateau tournant. Chaque compas tournant comprend une articulation supérieure, par exemple de type liaison pivot, qui articule le bras supérieur de ce compas tournant à un entraîneur de compas qui est solidaire en rotation de l'ensemble tournant. L'entraîneur de compas peut comprendre une pièce unitaire reliée aux deux compas tournants ou deux pièces distinctes reliées respectivement aux deux compas tournants. Un entraîneur de compas peut être fixé au mât rotor, ou à la tête du rotor et par exemple à un moyeu.

En outre, un plan radial contenant ledit axe de rotation, lesdites articulations inférieures respectivement desdits deux compas tournants sont positionnées dans ledit plan radial.

De plus, l'articulation supérieure et l'articulation centrale de chaque compas tournant sont décalées en azimut l'une par rapport à l'autre.

Plus précisément, les articulations supérieures respectivement desdits deux compas tournants présentant respectivement deux centres supérieurs d'articulation, lesdites articulations centrales respectivement desdits deux compas tournants présentant respectivement deux centres centraux d'articulation, le centre supérieur d'articulation et le centre central d'articulation de chaque compas tournant sont décalés en azimut l'un par rapport à l'autre, le centre supérieur d'articulation de l'articulation supérieure et le centre central d'articulation de l'articulation centrale d'un même compas tournant étant disposés de part et d'autre de ce plan radial.

Le rotor comporte alors notamment deux compas tournants, et donc deux bras inférieurs, deux bras supérieurs, deux articulations inférieures, deux articulations centrales et deux articulations supérieures.

Les expressions « centres centraux d'articulation » et « centres supérieurs d'articulation » peuvent désigner des points centraux d'articulations à pivot.

L'expression « décalés en azimut » signifie que le centre supérieur d'articulation et le centre central d'articulation d'un même compas tournant ne présentent pas le même angle d'azimut par rapport à un plan de référence passant par l'axe de rotation du rotor, notamment le plan radial. Dès lors, chaque compas tournant comporte un bras supérieur et un bras inférieur qui sont « biaisés », comparé à un compas tournant usuel.

L'agencement de compas tournants non biaisés ne peut pas être obtenu sur certains ensembles de plateaux cycliques compacts à faible diamètre. Dans cette configuration, au moins un compas tournant risque de toucher une bielle de pas.

Le rotor de l'invention permet de remédier à cet inconvénient en biaisant les compas tournants. Les compas tournants comportent chacun un bras supérieur qui ne s'étend pas radialement au regard de l'axe de rotation du rotor. Ainsi, le bras supérieur peut s'étendre globalement le long d'un plan qui ne passe pas par cet axe de rotation. L'articulation supérieure et l'articulation centrale d'un même compas tournant sont alors de fait décalées en azimut.

Dès lors, les compas tournants peuvent permettre d'obtenir un ensemble de plateaux cycliques compact.

De plus, le décalage en azimut de part et d'autre du plan radial du centre supérieur d'articulation et du centre central d'articulation d'un compas tournant tend à limiter un balourd du rotor en présence d'un compas biaisé. Le décalage des centres centraux d'articulation des deux compas tournants par rapport au plan radial peut en effet créer un balourd, le décalage des centres supérieurs d'articulation tendant à compenser ce balourd.

Par exemple, un des centres central et supérieur d'articulation d'un même compas tournant est décalé par rapport au plan radial selon un sens dextrorsum, et l'autre centre d'articulation est décalé par rapport au plan radial selon un sens senestrorsum.

De plus, il en résulte un biais total important pour chaque bras supérieur pour un décalage finalement léger de l'articulation central au regard du plan radial, ce décalage correspondant au décalage entre le centre central d'articulation et le plan radial.

Par contre, le centre inférieur d'articulation de ce même compas tournant est lui disposé sur le plan radial.

Le rotor peut de plus comporter une ou plusieurs des caractéristiques qui suivent, éventuellement combinées entre elles.

Plus précisément, le plateau tournant et le plateau non tournant étant mobiles en rotation autour d'un centre de rotation qui est mobile en translation le long de l'axe de rotation, les centres inférieurs d'articulation et le centre de rotation sont disposés dans un même plan.

Selon un aspect, les deux centres inférieurs d'articulation respectivement des deux articulations inférieures sont éventuellement disposés symétriquement de part et d'autre de l'axe de rotation du rotor lorsque le plateau tournant est orthogonal à cet axe de rotation.

L'expression « lorsque le plateau tournant est orthogonal à cet axe de rotation » peut faire référence à une position dans laquelle l'ensemble de plateaux cycliques requiert un pas cyclique nul des pales.

Selon un aspect, chaque articulation inférieure peut prendre la forme d'une rotule reliant un bras inférieur au plateau non tournant. Une telle rotule peut comprendre une bille traversée diamétralement par une tige solidaire du bras inférieur, la bille étant disposée dans une cage solidaire du plateau tournant.

Selon un aspect, le centre supérieur d'articulation de l'articulation supérieure et le centre central d'articulation de l'articulation centrale d'un même compas tournant peuvent être disposés à égales distances de ce plan radial.

Selon un aspect, l'articulation supérieure de chaque compas tournant pouvant comprendre une tige supérieure de pivotement traversant deux branches supérieures d'une chape femelle supérieure, chaque tige supérieure de pivotement s'étendant le long d'un axe supérieur de pivotement correspondant qui lui est propre, le centre supérieur d'articulation d'une articulation supérieure est positionné sur l'axe supérieur de pivotement correspondant à égales distances des branches supérieures correspondantes.

Par exemple, le centre supérieur d'articulation d'une articulation supérieure est positionné entre les deux branches dites « branches supérieures » d'une chape femelle supérieure d'un entraîneur de compas ou du bras supérieur du compas tournant correspondant.

De même, l'articulation centrale de chaque compas tournant pouvant comprendre une tige centrale de pivotement traversant deux branches centrales d'une chape femelle centrale, chaque tige centrale de pivotement s'étendant le long d'un axe central de pivotement correspondant qui lui est propre, ledit centre central d'articulation d'une articulation centrale est positionné sur l'axe central de pivotement correspondant à égales distances des branches centrales correspondantes.

Par exemple, le centre central d'articulation d'une articulation centrale est positionné entre les branches dites « branches centrales » d'une chape femelle centrale du bras supérieur ou du bras inférieur du compas tournant correspondant.

Selon un aspect, le plan radial séparant l'espace en un premier côté et un deuxième côté, les centres supérieurs d'articulation respectivement des deux compas tournants sont situés du premier côté et les centres centraux d'articulation respectivement des deux compas tournants sont situés dudit deuxième côté.

Selon un aspect, les centres supérieurs d'articulation respectivement des deux compas tournants et les centres centraux d'articulation respectivement des deux compas tournants peuvent être situés à une même distance dudit plan radial.

Selon un aspect, les deux bras inférieurs respectivement des deux compas tournants peuvent être disposés symétriquement de part et d'autre d'un plan transversal lorsque ledit plateau tournant est orthogonal au dit axe de rotation, ledit plan transversal étant orthogonal au plan radial, les deux bras supérieurs respectivement des deux compas tournants pouvant être disposés symétriquement de part et d'autre du plan transversal lorsque ledit plateau tournant est orthogonal au dit axe de rotation, ledit plan transversal contenant ledit axe de rotation.

Cette caractéristique tend à positionner le centre de gravité de l'ensemble comprenant les compas tournants et l'entraîneur de compas dans le plan transversal.

Selon un aspect, lorsque le plateau tournant est orthogonal au dit axe de rotation, lesdites articulations respectivement de pas des bielles de pas peuvent être situées sur un premier anneau, le premier anneau étant centré sur l'axe de rotation et présentant un premier diamètre, les articulations inférieures respectivement desdits compas tournants étant situées sur un deuxième anneau, ledit deuxième anneau étant centré sur l'axe de rotation et présentant un deuxième diamètre, ledit deuxième diamètre étant compris entre 95% et 105% du premier diamètre.

L'invention est notamment utile lorsque le diamètre d'implantation des articulations inférieures implique que chaque articulation centrale est radialement située à l'extérieur du premier anneau.

Le deuxième diamètre du deuxième anneau sur lequel sont implantés les compas tournants est sensiblement identique au premier diamètre du premier anneau sur lequel sont implantées les bielles de pas. La réalisation d'un plateau tournant de dimensions réduites, léger et présentant un moyen de roulement de grand diamètre par rapport au plateau non tournant est alors envisageable.

Selon un aspect, l'articulation inférieure de chaque compas tournant peut comporter une rotule.

Les deux articulations inférieures respectivement des deux compas comportent alors chacune une rotule.

Outre un rotor, l'invention vise un giravion muni d'au moins un tel rotor.

L'invention et ses avantages apparaîtront avec plus de détails dans le cadre de la description qui suit avec des exemples donnés à titre illustratif en référence aux figures annexées qui représentent :
- la figure 1, une vue schématique d'un giravion selon l'invention,
- la figure 2, une vue en trois dimensions d'un rotor selon l'invention,
- les figures 3 et 4, des vues de compas tournants,
- les figures 5 à 7, des vues de compas tournants agencés sur un entraîneur de compas, et
- la figure 8, un vue d'un rotor.

Les éléments présents dans plusieurs figures distinctes sont affectés d'une seule et même référence.

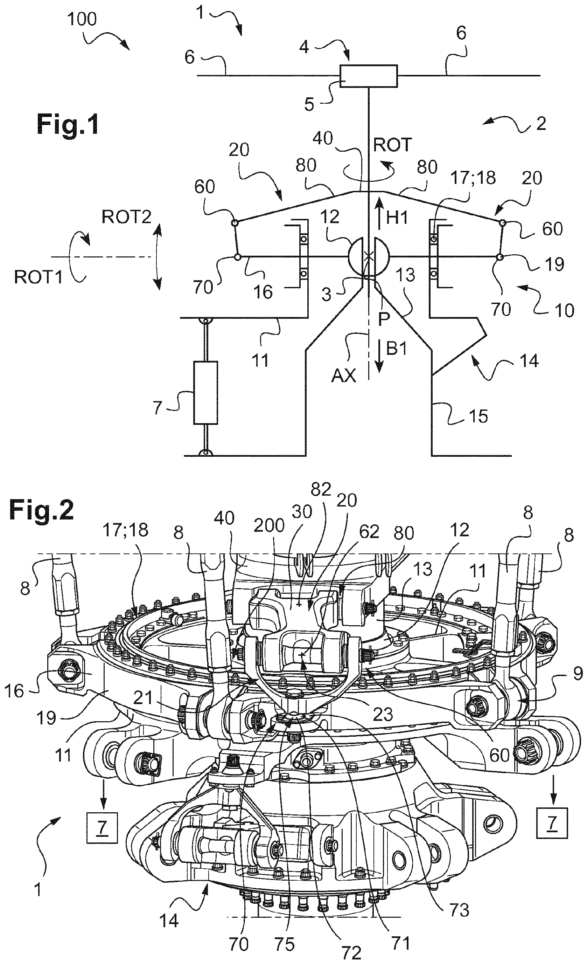

La figure 1 présente une vue schématique d'un aéronef 100 selon l'invention. Cet aéronef 100 est muni d'un rotor 1. Par exemple, le rotor 1 est un rotor d'une voilure tournante et participe au moins partiellement à la propulsion et/ou à la sustentation de l'aéronef 100. Les autres organes de l'aéronef ne sont pas représentés pour ne pas alourdir la figure 1.

L'aéronef 100 peut donc être un giravion, et notamment un hélicoptère par exemple.

Le rotor 1 comporte un ensemble tournant 2. Cet ensemble tournant 2 est muni d'un mât rotor 3 s'étendant en élévation le long d'un axe de rotation AX. Le mât rotor 3 peut comprendre un ou plusieurs tubes. Une installation motrice entraîne en rotation le mât rotor 3 autour de l'axe de rotation AX.

Le mât rotor 3 est solidaire en rotation autour de l'axe de rotation AX d'une tête rotor 4 portant au moins deux pales 6, voire au moins cinq pales 6 ou encore un nombre impair de pales supérieur ou égal à 5 et par exemple cinq ou sept pales. Par exemple, le mât rotor 3 est fixé à un moyeu 5 de la tête rotor 4. Ce moyeu 5 porte et entraîne en rotation les pales 6.

Ce rotor 1 est de plus pourvu d'un ensemble de plateaux cycliques 10 qui est relié à des commandes de vol par des servocommandes 7.

Plus précisément, l'ensemble de plateaux cycliques 10 comporte un premier plateau dit « plateau non tournant 11 ». Le plateau non tournant 11 est selon la figure 1 agencé sur une rotule de mât 12. La rotule de mât 12 est disposée de manière coulissante sur un élément fixe 13 de la structure de l'aéronef.

D'autres systèmes sont envisageables, tels que par exemple un système à colonnettes et à cardan.

Indépendamment de cet aspect, le plateau non tournant 11 est lié par un compas non tournant 14 à un organe immobile 15 fixe dans le référentiel de l'aéronef. Un tel organe immobile 15 peut être un élément d'un carter d'une boîte de transmission de puissance par exemple. De plus, l'organe immobile 15 peut être confondu avec l'élément fixe 13.

En outre, l'ensemble de plateaux cycliques 10 comporte un deuxième plateau dit « plateau tournant 16 » qui coopère avec le plateau non tournant 11 par un système de fixation 17. Par exemple, le plateau non tournant 11 porte le plateau tournant 16 via un système de fixation 17. Ce système de fixation 17 permet uniquement au plateau tournant 16 d'effectuer un mouvement rotatif autour de l'axe de rotation AX, par rapport au plateau non tournant 11. Un tel système de fixation 17 peut comprendre un système de roulement 18 à billes ou à rouleaux par exemple. Le plateau non tournant 11 est éventuellement agencé au sein d'un logement circulaire du plateau tournant.

On se rapportera à la littérature pour obtenir plus d'informations quant à l'agencement et au fonctionnement du plateau non tournant 11 et du plateau tournant 16 d'un ensemble de plateaux cycliques 10. On peut aussi se rapporter au document FR2848524 qui décrit une liaison entre le plateau tournant et le plateau non tournant.

Par ailleurs, l'ensemble de plateaux cycliques 10 possède un moyen d'entraînement liant en rotation le plateau tournant 16 et l'ensemble tournant 2.

Le moyen d'entraînement comprend deux compas tournants 20 à deux bras. Chaque compas tournant 20 est articulé au plateau tournant 16 et à un entraîneur de compas 40 qui est solidarisé à l'ensemble tournant. Un entraîneur de compas peut être fixé au mât rotor selon les exemples illustrés sur les figures, mais peut aussi être fixé au moyeu du rotor par exemple et de façon générale à tout élément de l'ensemble tournant.

Lorsque le mât rotor est mis en rotation autour de l'axe de rotation AX, le moyen d'entraînement induit l'entraînement du plateau tournant 16 en rotation autour de l'axe de rotation AX.

Dès lors, le plateau non tournant 11 est relié aux commandes de vol par des servocommandes 7, alors que le plateau tournant 16 est relié à chaque pale par une bielle de pas 8 visible sur la figure 2.

Lorsque les commandes de pas requièrent une augmentation collective du pas des pales 6, les servocommandes s'étendent de manière identique afin de translater conjointement le plateau non tournant 11 et le plateau tournant 16 le long de l'axe de rotation AX selon la flèche H1. Lorsque les commandes de pas requièrent une diminution collective du pas des pales 6, les servocommandes se rétractent de manière identique afin de translater conjointement le plateau non tournant 11 et le plateau tournant 16 le long de l'axe de rotation AX selon la flèche B1

Par contre, si les commandes de pas requièrent une variation cyclique du pas des pales 6, au moins une servocommande 7 s'étend ou se rétracte de manière différente des autres servocommandes. Le plateau non tournant 11 et le plateau tournant 16 s'inclinent alors conjointement par rapport à un centre de rotation P de l'ensemble de plateaux cycliques. Selon la figure 1, le centre de rotation P correspond au centre de la rotule de mât 12. En particulier, le plateau non tournant 11 et le plateau tournant 16 peuvent effectuer deux rotations ROT1, ROT2 selon deux axes orthogonaux entre eux.

En référence à la figure 2, chaque bielle de pas 8 peut être articulée par une articulation de pas 9 au plateau tournant 16. Par exemple, la périphérie 19 du plateau tournant 16 présente des chapes articulées chacune à une bielle de pas 8. Les articulations de pas 9 peuvent comprendre des rotules centrées chacune sur un centre d'articulation de pas. Les centres d'articulation de pas peuvent être contenus dans un même anneau lorsque le plateau tournant 16 est orthogonal à l'axe de rotation AX. Les centres d'articulation de pas et le centre de rotation P sont disposés dans un même plan.

Par ailleurs, chaque compas tournant 20 peut comprendre un bras inférieur 21, par exemple en forme de delta, qui est articulé au plateau tournant 16 via une articulation inférieure 70. Une telle articulation inférieure 70 peut comprendre une rotule 75. La rotule 75 comprend par exemple une bille 71 traversée par une tige du bras inférieur 21 et agencée dans une cage solidaire de la périphérie 19 du plateau tournant 16. Les deux articulations inférieures des deux compas peuvent être centrées chacune sur un centre inférieur d'articulation 72.

De plus, chaque compas tournant 20 peut comprendre un bras supérieur 30, par exemple en forme de H, qui est articulé à un entraîneur de compas 40 via une articulation supérieure 80. L'articulation supérieure 80 d'un compas tournant peut être centrée sur un centre supérieur d'articulation 82. Par exemple, les deux articulations supérieures prennent la forme de liaisons à pivot.

En outre, le bras inférieur 21 de chaque compas tournant est articulé au bras supérieur 30 de ce compas tournant via une articulation centrale 60. Cette articulation centrale 60 peut être centrée sur un centre central d'articulation 62. Par exemple, chaque articulation centrale 60 prend la forme d'une liaison à pivot.

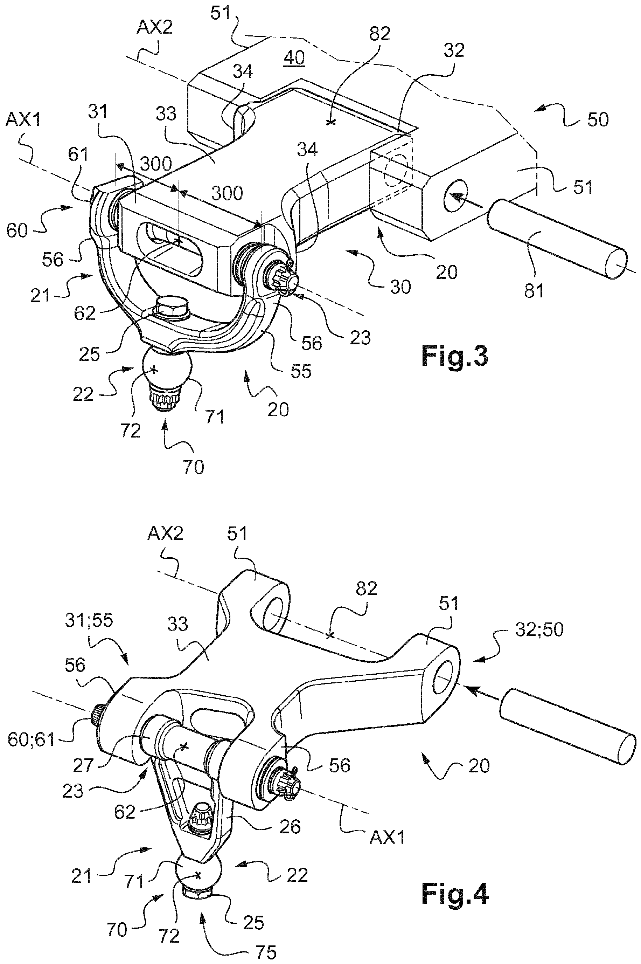

Les figures 3 et 4 illustrent diverses réalisations de compas tournants 20. Indépendamment de la réalisation, le bras inférieur d'un compas tournant s'étend d'une première portion extrémale 22 à articuler au plateau tournant vers une deuxième portion extrémale 23 à articuler au bras supérieur 30 correspondant de ce compas tournant. De même, le bras supérieur 30 s'étend d'une première zone extrémale 31 à articuler au bras inférieur de ce compas tournant vers une deuxième zone extrémale 32 à articuler à un entraîneur de compas 40.

La figure 3 présente une variante d'un compas tournant. Selon cette variante, le bras inférieur 21 peut avoir une forme de Y.

Ainsi, le bras inférieur 21 présente une première portion extrémale 22 munie d'une barre 25. La barre 25 traverse par exemple une bille 71 de l'articulation inférieure 70 du compas tournant. La barre 25 peut prendre la forme d'un boulon ou d'une tige filetée par exemple. De plus, la deuxième portion extrémale 23 peut posséder une structure en U dont le fond est traversé par la barre 25. Cette structure en U forme une chape femelle centrale 55 munie de deux branches centrales 56.

Le bras supérieur 30 présente un bloc s'étendant de la première zone extrémale 31 vers la deuxième zone extrémale 32 en passant par une zone intermédiaire 33. La première zone extrémale 31 est insérée entre les branches centrales 56 du bras inférieur 21, et est munie d'un premier orifice transversal. Dès lors, l'articulation centrale 60 peut comprendre une tige centrale de pivotement 61 s'étendant le long d'un axe central de pivotement AX1, la tige centrale de pivotement 61 traversant ledit premier orifice transversal de la première zone extrémale 31 et lesdites branches centrales 56. Le centre central d'articulation 62 de l'articulation centrale 60 est alors positionné sur l'axe central de pivotement AX1 du compas tournant à égales distances 300 des branches centrales 56 du bras inférieur.

De plus, la deuxième zone extrémale 32 est insérée entre les branches supérieures 51 d'une chape femelle supérieure de l'entraîneur de compas 40. Cette deuxième zone extrémale 32 est munie d'un deuxième orifice transversal. Dès lors, l'articulation supérieure 80 peut comprendre une tige supérieure de pivotement 81 s'étendant le long d'un axe supérieur de pivotement AX2, la tige supérieure de pivotement 81 traversant ledit deuxième orifice transversal de la deuxième zone extrémale 32 et lesdites branches supérieures 51 de l'entraîneur de compas 40. Le centre supérieur d'articulation 82 de l'articulation supérieure 80 est alors positionné sur l'axe supérieur de pivotement AX2 du compas tournant à égales distances des branches supérieures 51 de l'entraîneur de compas 40.

La figure 4 illustre une autre variante d'un compas tournant. Le bras inférieur 21 peut avoir une forme triangulaire.

Ainsi, le bras inférieur 21 présente une première portion extrémale 22 munie d'une barre 25. La barre 25 traverse par exemple une bille 71 de l'articulation inférieure 70 du compas tournant. De plus, la deuxième portion extrémale 23 peut posséder une structure en triangle traversée par la barre 25. Cette structure en triangle forme une chape, mâle ou femelle.

Le bras supérieur 30 présente une forme en H à double chapes femelles. Ainsi, le bras supérieur 30 s'étend d'une première zone extrémale 31 formant une chape femelle vers une deuxième zone extrémale 32 formant une autre chape femelle, en passant par une zone intermédiaire 33. La chape du bras inférieur est insérée entre les branches centrales 56 de la première zone extrémale 31 du bras supérieur, et est munie d'un premier orifice transversal. Dès lors, l'articulation centrale 60 peut comprendre une tige centrale de pivotement 61 s'étendant le long d'un axe central de pivotement AX1, la tige centrale de pivotement 61 traversant ledit premier orifice du bras inférieur et lesdites branches centrales 56 de la première zone extrémale 31. Le centre central d'articulation 62 de l'articulation centrale 60 est alors positionné sur l'axe central de pivotement AX1 du compas tournant à égales distances des branches centrales 56 de la première zone extrémale 31.

De plus, la deuxième zone extrémale 32 comprend deux branches centrales formant une chape femelle. La deuxième zone extrémale 32 est insérée autour d'un moyen de fixation de l'entraîneur de compas 40. Ce moyen de fixation est muni d'au moins un deuxième orifice transversal. Dès lors, l'articulation supérieure 80 peut comprendre une tige supérieure de pivotement 81 s'étendant le long d'un axe supérieur de pivotement AX2, la tige supérieure de pivotement 81 traversant ledit deuxième orifice et des branches supérieures 51 de la deuxième zone extrémale 32. Le centre supérieur d'articulation 82 de l'articulation supérieure 80 est alors positionné sur l'axe supérieur de pivotement AX2 du compas tournant à égales distances des branches supérieures 51 de la deuxième zone extrémale 32.

L'axe central de pivotement AX1 et l'axe supérieur de pivotement AX2 d'un même compas tournant peuvent être parallèles entre eux. De plus, les axes centraux de pivotement AX1 et les axes supérieurs de pivotement AX2 des deux compas tournants peuvent être parallèles entre eux.

Quelle que soit la variante, l'articulation supérieure 80 de chaque compas tournant 20 comprend une tige supérieure de pivotement 81 traversant deux branches supérieures 51 d'une chape femelle supérieure 50, chaque tige supérieure de pivotement 81 s'étendant le long d'un axe supérieur de pivotement AX2 correspondant, le centre supérieur d'articulation 82 de l'articulation supérieure 80 étant positionné sur l'axe supérieur de pivotement AX2 correspondant à égales distances des branches supérieures 51 correspondantes.

De même, l'articulation centrale 60 de chaque compas tournant 20 comprend une tige centrale de pivotement 61 traversant deux branches centrales 56 d'une chape femelle centrale 55, chaque tige centrale de pivotement 61 s'étendant le long d'un axe central de pivotement AX1 correspondant. Le centre central d'articulation 62 d'une articulation centrale 60 est positionné sur l'axe central de pivotement AX1 correspondant à égales distances des branches centrales 56 correspondantes.

Selon un autre aspect et en référence à la figure 2, chaque compas tournant 20 est biaisé. Ainsi, l'articulation supérieure 80 et l'articulation centrale 60 d'un compas tournant 20 sont décalées en azimut l'une par rapport à l'autre.

En décalant les centres centraux d'articulation 62 du plan radial, un jeu 200 peut être introduit entre chaque bielle de pas 8 et les compas tournants 20.

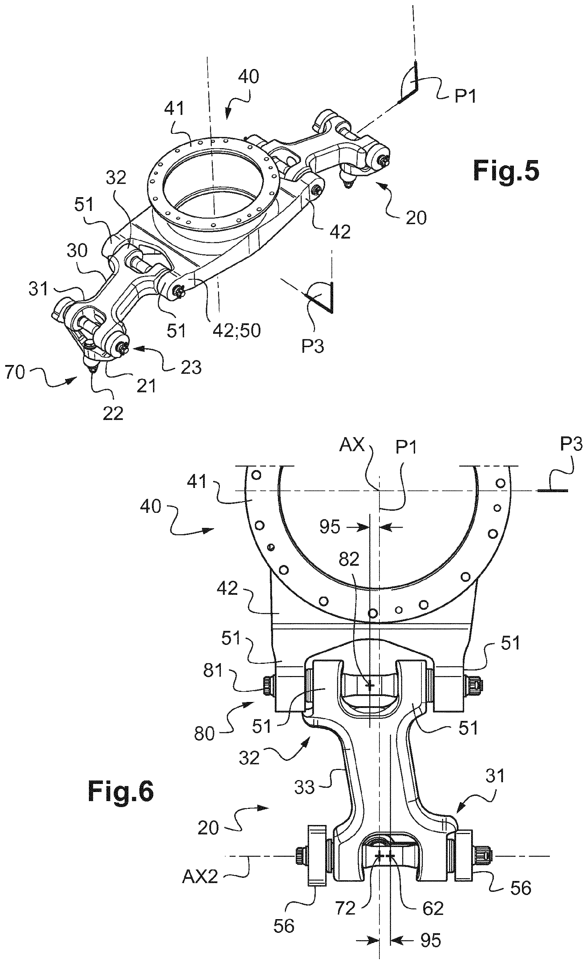

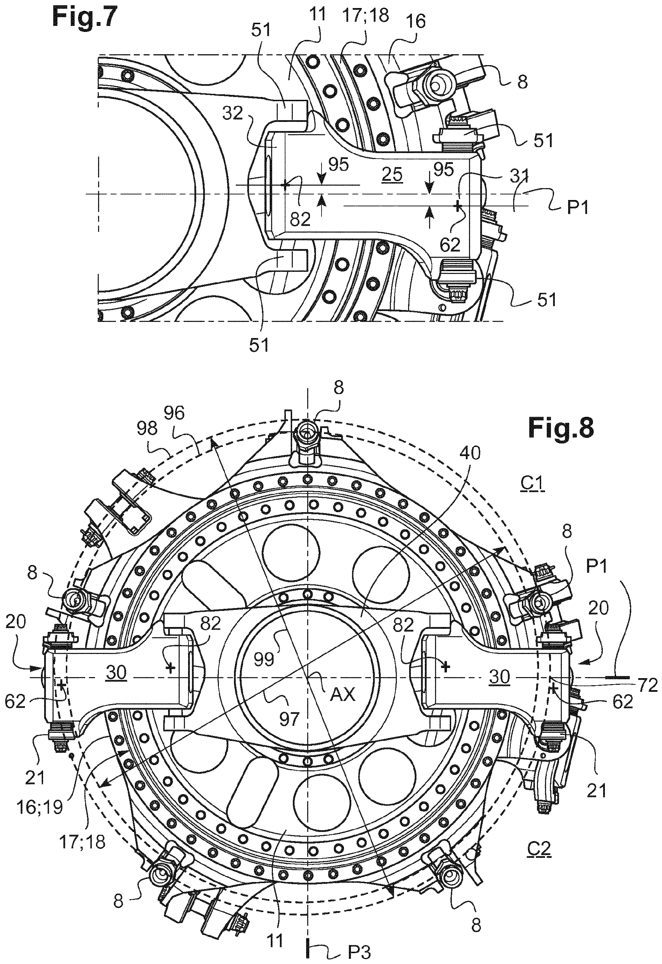

Les figures 5 et 6 illustrent le montage de compas tournants selon la figure 4 à un entraîneur de compas, alors que la figure 7 illustre le montage d'un compas tournant selon la figure 3 à un entraîneur de compas.

Selon un autre aspect et indépendamment de la variante du compas tournant, la figure 5 illustre un entraîneur de compas 40 fixé aux deux compas tournants. Un tel entraîneur de compas peut présenter un cylindre 41 à solidariser par exemple au mât rotor 3, et deux moyens de fixations 42 diamétralement opposés fixés au cylindre 41. Par exemple, l'entraîneur de compas est symétrique par rapport à un plan transversal P3 passant par ledit axe de rotation AX. Le plan radial P1 peut être perpendiculaire au plan transversal P3, l'axe de rotation AX se situant à l'intersection du plan radial P1 et du plan transversal P3.

En référence à la figure 6, les centres inférieurs d'articulation 72 des deux articulations inférieures 70 des deux compas tournants 20 sont tous deux positionnés dans le plan radial P1 passant par l'axe de rotation AX. En particulier, les deux centres inférieurs d'articulation 72 respectivement des deux compas tournants sont positionnés dans ledit plan radial P1, et sont éventuellement symétriques l'un par rapport à l'autre au regard de l'axe de rotation lorsque le plateau tournant 16 est orthogonal à l'axe de rotation AX.

Par contre, le centre supérieur d'articulation 82 de l'articulation supérieure 80 et le centre central d'articulation 62 de l'articulation centrale 60 d'un même compas tournant 20 sont disposés de part et d'autre d'un plan radial P1.

En outre, une même distance 95 peut séparer chaque centre supérieur d'articulation 82 et/ou chaque centre central d'articulation 62 du plan radial P1.

Selon un autre aspect et en référence à la figure 8, le plan radial P1 sépare l'espace en un premier côté C1 et un deuxième côté C2.

Les deux centres supérieurs d'articulation 82 des deux compas tournants 20 peuvent être situés du premier côté C1. A l'inverse, les deux centres centraux d'articulation 62 des deux compas tournants 20 sont alors situés du deuxième côté C2.

Par ailleurs, les deux bras inférieurs 21 respectivement des deux compas tournants 20 peuvent être disposés symétriquement de part et d'autre du plan transversal P3 lorsque le plateau tournant 16 est orthogonal à l'axe de rotation AX. Dans cette configuration, les deux bras supérieurs 30 respectivement des deux compas tournants 20 sont aussi symétriques l'un par rapport à l'autre de part et d'autre du plan transversal P3.

Selon un autre aspect, la figure 8 illustre le fait que l'ensemble de plateaux cycliques 10 peut être compact. Lorsque le plateau tournant 16 est orthogonal à l'axe de rotation AX, les articulations de pas 9, et par exemple les centres des articulations de pas, sont en effet situées sur un premier anneau 96 centré sur l'axe de rotation AX et présentant un premier diamètre 97. Les articulations inférieures 70 des compas tournants 20, et par exemple les centres inférieurs d'articulation 72, sont situées sur un deuxième anneau 98 centré sur l'axe de rotation AX et présentant un deuxième diamètre 99. Dès lors, le deuxième diamètre 99 peut être compris entre 95% et 105% du premier diamètre 97 sans interférence entre les bielles de pas 8 et les compas tournants 20 en raison des biais de ces compas tournants.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (1) de giravion (100) muni d'un ensemble tournant (2) effectuant une rotation autour d'un axe de rotation (AX), ledit ensemble tournant (2) comprenant un mât rotor (3) ainsi qu'une tête rotor (4) portant au moins deux pales (6), ledit rotor (1) comprenant un ensemble de plateaux cycliques (10) muni d'un plateau non tournant (11) et d'un plateau tournant (16), ledit rotor (1) comprenant une bielle de pas (8) par pale (6), chaque bielle de pas (8) étant articulée au plateau tournant (16) par une articulation de pas (9), ledit rotor (1) comprenant deux compas tournants (20) articulés au plateau tournant (16), chaque compas tournant (20) comprenant un bras inférieur (21) et un bras supérieur (30) articulés l'un à l'autre par une articulation centrale (60), chaque compas tournant (20) comprenant une articulation inférieure (70) qui articule ledit bras inférieur (21) de ce compas tournant (20) au plateau tournant (16), chaque compas tournant (20) comprenant une articulation supérieure (80) qui articule ledit bras supérieur (30) de ce compas tournant (20) à un entraîneur de compas (40) qui est solidaire en rotation de l'ensemble tournant (2),
**caractérisé par** un plan radial (P1) contenant ledit axe de rotation (AX), lesdites articulations inférieures (70) respectivement desdits deux compas tournants (20) étant positionnées dans ledit plan radial (P1), lesdites articulations supérieures (80) respectivement desdits deux compas tournants (20) présentant respectivement deux centres supérieurs d'articulation (82), lesdites articulations centrales (60) respectivement desdits deux compas tournants (20) présentant respectivement deux centres centraux d'articulation (62), le centre supérieur d'articulation et le centre central d'articulation de chaque compas tournant (20) sont décalés en azimut l'un par rapport à l'autre, le centre supérieur d'articulation (82) de l'articulation supérieure (80) et le centre central d'articulation (62) de l'articulation centrale (60) d'un même compas tournant (20) étant disposés de part et d'autre de ce plan radial (P1).

2. Rotor selon la revendication 1,
**caractérisé en ce que** lesdites articulations inférieures (70) respectivement desdits deux compas tournants (20) présentent respectivement deux centres inférieurs d'articulation (72) positionnés dans ledit plan radial (P1).

3. Rotor selon la revendication 2,
**caractérisé en ce que** lesdits centres inférieurs d'articulation (72) respectivement desdites deux articulations inférieures (70) sont disposés symétriquement de part et d'autre dudit axe de rotation (AX) lorsque ledit plateau tournant (16) est orthogonal au dit axe de rotation (AX).

4. Rotor selon l'une quelconque des revendications 1 à 3,
**caractérisé en ce que** ledit plan radial (P1) séparant l'espace en un premier côté (C1) et un deuxième côté (C2), lesdits centres supérieurs d'articulation (82) respectivement des deux compas tournants (20) sont situés dudit premier côté (C1) et lesdits centres centraux d'articulation (62) respectivement des deux compas tournants (20) sont situés dudit deuxième côté (C2).

5. Rotor selon l'une quelconque des revendications 1 à 4,
**caractérisé en ce que** lesdits centres supérieurs d'articulation (82) respectivement des deux compas tournants (20) et lesdits centres centraux d'articulation (62) respectivement des deux compas tournants (20) sont situés à une même distance (95) dudit plan radial (P1).

6. Rotor selon l'une quelconque des revendications 1 à 5,
**caractérisé en ce que** l'articulation supérieure (80) de chaque compas tournant (20) comprenant une tige supérieure de pivotement (81) traversant deux branches supérieures (51) d'une chape femelle supérieure (50), chaque tige supérieure de pivotement (81) s'étendant le long d'un axe supérieur de pivotement (AX2) correspondant, ledit centre supérieur d'articulation (82) d'une articulation supérieure (80) est positionné sur l'axe supérieur de pivotement (AX2) correspondant à égales distances des branches supérieures (51) correspondantes.

7. Rotor selon l'une quelconque des revendications 1 à 6,
**caractérisé en ce que** l'articulation centrale (60) de chaque compas tournant (20) comprenant une tige centrale de pivotement (61) traversant deux branches centrales (56) d'une chape femelle centrale (55), chaque tige centrale de pivotement (61) s'étendant le long d'un axe central de pivotement (AX1) correspondant, ledit centre central d'articulation (62) d'une articulation centrale (60) est positionné sur l'axe central de pivotement (AX1) correspondant à égales distances des branches centrales (56) correspondantes.

8. Rotor selon l'une quelconque des revendications 1 à 7,
**caractérisé en ce que** les deux bras inférieurs (21) respectivement des deux compas tournants (20) sont disposés symétriquement de part et d'autre d'un plan transversal (P3) lorsque ledit plateau tournant (16) est orthogonal au dit axe de rotation (AX), ledit plan transversal (P3) étant orthogonal au plan radial (P1), les deux bras supérieurs (30) respectivement des deux compas tournants (20) étant disposés symétriquement de part et d'autre du plan transversal (P3) lorsque ledit plateau tournant (16) est orthogonal au dit axe de rotation (AX), ledit plan transversal (P3) contenant ledit axe de rotation (AX).

9. Rotor selon l'une quelconque des revendications 1 à 8,
**caractérisé en ce que**, lorsque ledit plateau tournant (16) est orthogonal au dit axe de rotation (AX), lesdites articulations de pas (9) respectivement desdites bielles de pas (8) sont situées sur un premier anneau (96), le premier anneau (96) étant centré sur l'axe de rotation (AX) et présentant un premier diamètre (97), les articulations inférieures (60) respectivement desdits deux compas tournants (20) étant situées sur un deuxième anneau (98), ledit deuxième anneau (98) étant centré sur l'axe de rotation (AX) et présentant un deuxième diamètre (99), ledit deuxième diamètre (99) étant compris entre 95% et 105% du premier diamètre (97).

10. Rotor selon l'une quelconque des revendications 1 à 9,
**caractérisé en ce que** ladite articulation inférieure (70) de chaque compas tournant (20) comporte une rotule (75).

11. Giravion (100) muni d'au moins un rotor (1),
**caractérisé en ce que** ledit rotor (1) est selon l'une quelconque des revendications 1 à 10.

## Patentansprüche

1. Rotor (1) für ein Drehflügelflugzeug (100), das mit einer rotierenden Anordnung (2) ausgestattet ist, die eine Drehung um eine Drehachse (AX) ausführt, wobei die rotierende Anordnung (2) einen Rotormast (3) sowie einen Rotorkopf (4) umfasst, der mindestens zwei Blätter (6) trägt, wobei der Rotor (1) einen Satz Taumelscheiben (10) mit einer nicht rotierenden Scheibe (11) und einer rotierenden Scheibe (16) umfasst, der Rotor (1) eine Neigungsstange (8) pro Blatt (6) umfasst, wobei jede Neigungsstange (8) über ein Neigungsgelenk (9) mit der rotierenden Scheibe (16) verbunden ist, wobei der Rotor (1) zwei rotierende Lenker (20) umfasst, die an die rotierende Scheibe (16) angelenkt sind, wobei jeder rotierende Lenker (20) einen unteren Arm (21) und einen oberen Arm (30) umfasst, die durch ein mittleres Gelenk (60) miteinander verbunden sind, wobei jeder rotierende Lenker (20) ein unteres Gelenk (70) umfasst, das den unteren Arm (21) des rotierenden Lenkers (20) an die rotierende Scheibe (16) anlenkt, wobei jeder rotierende Lenker (20) ein oberes Gelenk (80) umfasst, das den oberen Arm (30) des rotierenden Lenkers (20) mit einem Lenkerantrieb (40) verbindet, der mit der rotierenden Anordnung (2) drehfest verbunden ist,
**gekennzeichnet durch** eine radiale Ebene (P1), die die Drehachse (AX) enthält, wobei die unteren Gelenke (70) der beiden rotierenden Lenker (20) in der radialen Ebene (P1) positioniert sind, wobei die oberen Gelenke (80) der beiden rotierenden Lenker (20) jeweils zwei obere Gelenkmitten (82) aufweisen, wobei die mittleren Gelenke (60) der beiden rotierenden Lenker (20) jeweils zwei mittlere Gelenkmitten (62) aufweisen, wobei die obere Gelenkmitte und die mittlere Gelenkmitte jedes rotierenden Lenkers (20) zueinander azimutal versetzt sind, wobei die obere Gelenkmitte (82) des oberen Gelenks (80) und die mittlere Gelenkmitte (62) des mittleren Gelenkes (60) des gleichen rotierenden Lenkers (20) auf verschiedenen Seiten dieser Radialebene (P1) angeordnet sind.

2. Rotor nach Anspruch 1,
**dadurch gekennzeichnet, dass** die unteren Gelenke (70) der beiden rotierenden Lenker (20) jeweils zwei untere Gelenkmitten (72) aufweisen, die in der radialen Ebene (P1) positioniert sind.

3. Rotor nach Anspruch 2,
**dadurch gekennzeichnet, dass** die unteren Gelenkmitten (72) der beiden unteren Gelenke (70) symmetrisch auf beiden Seiten der Drehachse (AX) angeordnet sind, wenn die rotierende Scheibe (16) orthogonal zur Drehachse (AX) ist.

4. Rotor nach einem der Ansprüche 1 bis 3,
**dadurch gekennzeichnet, dass** die radiale Ebene (P1) den Raum in eine erste Seite (C1) und eine zweite Seite (C2) teilt, wobei die oberen Gelenkmitten (82) der beiden rotierenden Lenker (20) jeweils auf der ersten Seite (C1) und die mittleren Gelenkmitten (62) der beiden rotierenden Lenker (20) auf der zweiten Seite (C2) angeordnet sind.

5. Rotor nach einem der Ansprüche 1 bis 4,
**dadurch gekennzeichnet, dass** die oberen Gelenkmitten (82) der beiden rotierenden Lenker (20) und die mittleren Gelenkmitten (62) der beiden rotierenden Lenker (20) im gleichen Abstand (95) von der Radialebene (P1) angeordnet sind.

6. Rotor nach einem der Ansprüche 1 bis 5,
**dadurch gekennzeichnet, dass** das obere Gelenk (80) jedes rotierenden Lenkers (20) eine obere Schwenkstange (81) umfasst, die durch zwei obere Schenkel (51) eines oberen weiblichen Gabelkopfes (50) verläuft, wobei sich jede obere Schwenkstange (81) entlang einer entsprechenden oberen Drehachse (AX2) erstreckt, wobei die obere Gelenkmitte (82) eines oberen Gelenkes (80) auf der oberen Drehachse (AX2) positioniert ist, die gleichen Abständen der entsprechenden oberen Schenkel (51) entspricht.

7. Rotor nach einem der Ansprüche 1 bis 6,
**dadurch gekennzeichnet, dass** das mittlere Gelenk (60) jedes rotierenden Lenkers (20) eine mittlere Schwenkstange (61) umfasst, die durch zwei mittlere Schenkel (56) eines mittleren weiblichen Gabelkopfes (55) verläuft, wobei sich jede mittlere Schwenkstange (61) entlang einer entsprechenden mittleren Drehachse (AX1) erstreckt, wobei die mittlere Gelenkmitte (62) eines mittleren Gelenks (60) auf der mittleren Drehachse (AX1) positioniert ist, die gleichen Abständen der entsprechenden mittleren Schenkel (56) entspricht.

8. Rotor nach einem der Ansprüche 1 bis 7,
**dadurch gekennzeichnet, dass** die beiden unteren Arme (21) der beiden rotierenden Lenker (20) symmetrisch auf beiden Seiten einer Querebene (P3) angeordnet sind, wenn die rotierende Scheibe (16) orthogonal zur Drehachse (AX) ist, wobei die Querebene (P3) orthogonal zur Radialebene (P1) ist, und dass die beiden oberen Arme (30) der beiden rotierenden Lenker (20) symmetrisch auf beiden Seiten der Querebene (P3) angeordnet sind, wenn die rotierende Scheibe (16) orthogonal zur Drehachse (AX) ist, wobei die Querebene (P3) die Drehachse (AX) enthält.

9. Rotor nach einem der Ansprüche 1 bis 8,
**dadurch gekennzeichnet, dass** wenn die rotierende Scheibe (16) orthogonal zur Drehachse (AX) ist, die Neigungsgelenke (9) der Neigungsstangen (8 auf einem ersten Ring (96) liegen, dass der erste Ring (96) um die Drehachse (AX) zentriert ist und einen ersten Durchmesser (97) aufweist, dass die unteren Gelenke (60) der rotierenden Lenker (20) auf einem zweiten Ring (98) liegen, dass der zweite Ring (98) um die Drehachse (AX) zentriert ist und einen zweiten Durchmesser (99) aufweist, und dass der zweite Durchmesser (99) zwischen 98% und 105% des ersten Durchmessers (97) beträgt.

10. Rotor nach einem der Ansprüche 1 bis 9,
**dadurch gekennzeichnet, dass** das untere Gelenk (70) jedes rotierenden Lenkers (20) ein Kugelgelenk (75) aufweist.

11. Drehflügelflugzeug mit mindestens einem Rotor(1),
**dadurch gekennzeichnet, dass** der Rotor (1) nach einem der Ansprüche 1 bis 10 ist.

## Claims

1. Rotor (1) of a rotorcraft (100) provided with a rotating assembly (2) that rotates about an axis of rotation (AX), said rotating assembly (2) including a rotor mast (3) as well as a rotor head (4) carrying at least two blades (6), said rotor (1) including a set of swashplates (10) provided with a non-rotating plate (11) and a rotating plate (16), said rotor (1) including a pitch rod (8) for each blade (6), each pitch rod (8) being pivotally connected to the rotating plate (16) by a pitch hinge (9), said rotor (1) including two rotating compasses (20) pivotally connected to the rotating plate (16), each rotating compass (20) including a lower arm (21) and an upper arm (30) that are pivotally interconnected by a central hinge (60), each rotating compass (20) including a lower hinge (70) which pivotally connects said lower arm (21) of said rotating compass (20) to the rotating plate (16), each rotating compass (20) including an upper hinge (80) which pivotally connects said upper arm (30) of said rotating compass (20) to a compass driver (40) which is connected to the rotating assembly (2) for conjoint rotation, **characterised by** a radial plane (P1) containing said axis of rotation (AX), said lower hinges (70) of said two rotating compasses (20) being positioned in said radial plane (P1), said upper hinges (80) of said two rotating compasses (20) having two upper hinge centres (82), said central hinges (60) of said two rotating compasses (20) having two central hinge centres (62), and the upper hinge centre and the central hinge centre of each rotating compass (20) are offset in azimuth with respect to one another, the upper hinge centre (82) of the upper hinge (80) and the central hinge centre (62) of the central hinge (60) of the same rotating compass (20) being arranged on either side of said radial plane (P1).

2. Rotor according to claim 1, **characterised in that** said lower hinges (70) of said two rotating compasses (20) have two lower hinge centres (72) positioned in said radial plane (P1).

3. Rotor according to claim 2, **characterised in that** said lower hinge centres (72) of said two lower hinges (70) are arranged symmetrically on either side of said axis of rotation (AX) when said rotating plate (16) is orthogonal to said axis of rotation (AX).

4. Rotor according to any of claims 1 to 3, **characterised in that**, said radial plane (P1) dividing the space into a first side (C1) and a second side (C2), said upper hinge centres (82) of the two rotating compasses (20) are located on said first side (C1) and said central hinge centres (62) of the two rotating compasses (20) are located on said second side (C2).

5. Rotor according to any of claims 1 to 4, **characterised in that** said upper hinge centres (82) of the two rotating compasses (20) and said central hinge centres (62) of the two rotating compasses (20) are located at the same distance (95) from said radial plane (P1).

6. Rotor according to any of claims 1 to 5, **characterised in that**, the upper hinge (80) of each rotating compass (20) including an upper pivoting rod (81) passing through two upper branches (51) of an upper female clevis (50), each upper pivoting rod (81) extending along a corresponding upper pivot axis (AX2), said upper hinge centre (82) of an upper hinge (80) is positioned on the corresponding upper pivot axis (AX2) at equal distances from the corresponding upper branches (51).

7. Rotor according to any of claims 1 to 6, **characterised in that**, the central hinge (60) of each rotating compass (20) including a central pivoting rod (61) passing through two central branches (56) of a central female clevis (55), each central pivoting rod (61) extending along a corresponding central pivot axis (AX1), said central hinge centre (62) of a central hinge (60) is positioned on the corresponding central pivot axis (AX1) at equal distances from the corresponding central branches (56).

8. Rotor according to any of claims 1 to 7, **characterised in that** the two lower arms (21) of the two rotating compasses (20) are arranged symmetrically on either side of a transverse plane (P3) when said rotating plate (16) is orthogonal to said axis of rotation (AX), said transverse plane (P3) being orthogonal to the radial plane (P1), the two upper arms (30) of the two rotating compasses (20) being arranged symmetrically on either side of the transverse plane (P3) when said rotating plate (16) is orthogonal to said axis of rotation (AX), said transverse plane (P3) containing said axis of rotation (AX).

9. Rotor according to any of claims 1 to 8, **characterised in that**, when said rotating plate (16) is orthogonal to said axis of rotation (AX), said pitch hinges (9) of said pitch rods (8) are located on a first ring (96), the first ring (96) being centred on the axis of rotation (AX) and having a first diameter (97), the lower hinges (60) of said two rotating compasses (20) being located on a second ring (98), said second ring (98) being centred on the axis of rotation (AX) and having a second diameter (99), said second diameter (99) being between 95% and 105% of the first diameter (97).

10. Rotor according to any of claims 1 to 9, **characterised in that** said lower hinge (70) of each rotating compass (20) comprises a ball joint (75).

11. Rotorcraft (100) provided with at least one rotor (1), **characterised in that** said rotor (1) is in accordance with any of claims 1 to 10.
